# EUROPEAN PATENT SPECIFICATION

(11) **EP 2 706 686 B1**
(45) Date of publication and mention of the grant of the patent: **12.06.2019**
(21) Application number: 11864848.4
(22) Date of filing: 27.10.2011
(51) Int. Cl.: H04J 3/06, H04L 12/26

(54) **METHOD, TERMINAL AND SYSTEM FOR MEASURING ASYMMETRIC DELAY OF TRANSMISSION LINK**
VERFAHREN, ENDGERÄT UND SYSTEM ZUR MESSUNG VON ASYMMETRISCHER VERZÖGERUNG EINER ÜBERTRAGUNGSVERBINDUNG
PROCÉDÉ, TERMINAL ET SYSTÈME POUR MESURER UN RETARD ASYMÉTRIQUE D'UNE LIAISON DE TRANSMISSION

(30) Priority: 03.05.2011 CN 201110112517
(43) Date of publication of application: 12.03.2014
(73) Proprietor: ZTE Corporation, Shenzhen, Guangdong 518057 (CN)
(72) Inventor: ZHAN, Hailiang, Shenzhen Guangdong 518057 (CN); ZHANG, Gaoan, Shenzhen Guangdong 518057 (CN); LI, Xiaoxia, Shenzhen Guangdong 518057 (CN)
(74) Representative: Prinz & Partner mbB
(86) International application number: PCT/CN2011/081382
(87) International publication number: WO 2012/149811

(56) References cited:
- EP-A1- 1 802 014
- CN-A- 101 937 253
- CN-A- 102 013 931
- CN-A- 102 201 983
- US-A1- 2008 031 283
- US-A1- 2010 098 111

## Description

### TECHNICAL FIELD

The disclosure relates to the field of optical communication technology, and in particular to a method, terminal and system for measuring an asymmetric delay of a transmission link.

### BACKGROUND

At present, time transporting technology is applied in a transport network more and more extensively. In order to implement time transport of high precision, current time transport among different sites in the transport network is mainly based on a 1588 protocol, by means of which nanosecond-level time transport can be implemented by way of a synchronous Ethernet.

US 2008/031283 A1 discloses a method of synchronizing a clock of one device with a clock on another device, comprising: (a) sending, by a first device, a request for the local time at a second device; (b) recording a time at which the request was sent; (c) receiving a response from the second device, the response including a time at which the second device received the request; (d) storing a time at which the first device received the response; and (e) determining a one-way delay using the time at which the request was sent by the first device, the time at which the second device received the request, a time at which the second device sent the response, and the time at which the first device received the response.

EP 1802014 A1 relates to techniques for correcting time synchronization inaccuracy caused by asymmetric delays on a communication link, comprising: determining an asymmetry in a propagation delay on a communication link used by a first device and a second device 102 to exchange timing information and incorporating the asymmetry into a determination of a clock offset between the first and second devices.

However, with the existing 1588 protocol, there is no mature solution for calculating an asymmetric delay of a transmission link. Furthermore, in actual applications, when a device is put into use, optical fiber connections are generally switched in a manual manner, and the asymmetric delay of a route is measured by an external instrument. This not only causes low precision in delay measurement, but also increases complexity in putting a device into use and brings about much inconvenience to the start of a project.

### SUMMARY

A main purpose of the disclosure is to provide a method, terminal and system, as claimed respectively in independent claims 1, 3 and 5, for measuring an asymmetric delay of a transmission link, so as to improve accuracy in measuring the asymmetric delay of the transmission link and simplify a measuring process. Preferred embodiments are covered by the dependent claims.

In order to achieve the aforementioned purpose, a method for measuring an asymmetric delay of a transmission link is provided as defined in claim 1.

Preferably, the slave terminal may perform clock synchronization with the master terminal via a synchronous Ethernet.

A slave terminal for measuring an asymmetric delay of a transmission link is provided as defined in claim 3.

Preferably, the slave terminal may perform clock synchronization with the master terminal via a synchronous Ethernet.

A system for measuring an asymmetric delay of a transmission link is provided as defined in claim 5.

Preferably, the master terminal may be further configured to: after the master terminal sends the first message, receive the first switching message from the slave terminal; send the second switching message according to the first switching message; and when the second switching message is sent, perform the switchover to change optical fiber connection.

Preferably, the slave terminal may perform clock synchronization with the master terminal via a synchronous Ethernet.

With the method, terminal and system for measuring an asymmetric delay of a transmission link proposed by the disclosure, clock synchronization of a master terminal and a slave terminal at opposite ends of a transmission link is implemented by using a function of a synchronous Ethernet, a timestamp of sending or receiving a message by the master terminal or the slave terminal is recorded, switchover between optical fibers on a link is performed by switching a switch, and after switchover, a message is sent again and timestamps of the message at the master terminal and the slave terminal are recorded. The slave terminal can calculate an asymmetric delay of the transmission link quickly according to four timestamps acquired two by two, with an accuracy up to a nanosecond level. Switchover of optical fibers on a link is implemented by switching a respective optical switch in the master terminal and the slave terminal, so that inconvenience in manual switchover of optical fibers is avoided, and a process of performing a test by means of an external instrument is omitted.

### BRIEF DESCRIPTION OF THE DRAWINGS

Fig. 1 is a schematic flowchart of an embodiment of a method for measuring an asymmetric delay of a transmission link according to the disclosure;
Fig. 2 is a schematic flowchart of performing switchover by a slave terminal with a master terminal by exchanging messages with the master terminal in an embodiment of a method for measuring an asymmetric delay of a transmission link according to the disclosure;
Fig. 3 is a schematic diagram of a structure of an embodiment of a terminal for measuring an asymmetric delay of a transmission link according to the disclosure;
Fig. 4 is a schematic diagram of a structure of a switchover module in an embodiment of a terminal for measuring an asymmetric delay of a transmission link according to the disclosure; and
Fig. 5 is a schematic diagram of a structure of an embodiment of a system for measuring an asymmetric delay of a transmission link according to the disclosure.

In order to make the technical solution of the disclosure clearer and easier to understand, the disclosure is further elaborated below with reference to the drawings.

### DETAILED DESCRIPTION

The solution of an embodiment of the disclosure is mainly that: clock synchronization of a master terminal and a slave terminal at opposite ends of a transmission link is implemented by using a function of a synchronous Ethernet, a timestamp of sending or receiving a message by the master terminal or the slave terminal is recorded, switchover between optical fibers on a link is performed by switching a switch, and after switchover, a message is sent again and timestamps of the message at the master terminal and the slave terminal are recorded. The slave terminal can calculate an asymmetric delay of the transmission link quickly according to four timestamps acquired two by two.

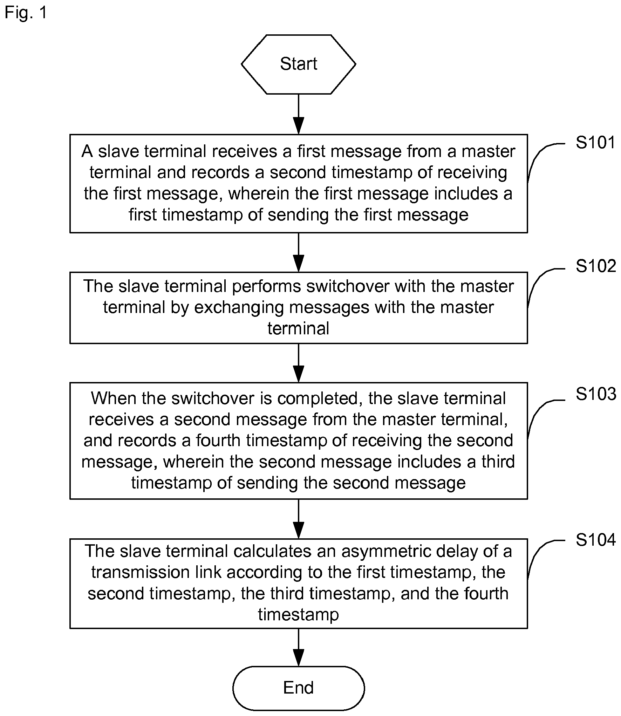

As shown in Fig. 1, an embodiment of the disclosure proposes a method for measuring an asymmetric delay of a transmission link, which includes the following steps:
S101: A slave terminal receives a first message from a master terminal and records a second timestamp of receiving the first message, wherein the first message includes a first timestamp of sending the first message.

In the embodiment, the master terminal and the slave terminal are located respectively at opposite ends of a transmission link where optical fibers an asymmetric delay of which is to be calculated are located.

First, the master terminal sends a first message to the slave terminal, and carries the first timestamp of sending the first message in the first message. After receiving the first message from the master terminal, the slave terminal records a second timestamp t2 of receiving the first message, and acquires the first timestamp t1 in the first message.

In the embodiment, clock synchronization of the master terminal and the slave terminal is implemented via a synchronous Ethernet. Specifically, a PHY chip or logic device with functions of the synchronous Ethernet and recording a timestamp is used to implement the clock synchronization of the slave terminal with the master terminal and record timestamps of sending and receiving a message in a physical layer.

Wherein, a master-slave relation between the master terminal and the slave terminal can be determined by message interaction according to attributes of the two terminals after the two terminals start to operate, and the slave terminal performs clock synchronization with the master terminal via the synchronous Ethernet.

After the master terminal sends the first message and the first message is input to a PHY chip or logic device, the master terminal records the first timestamp t1 of sending the first message on the PHY chip or logic device, and inserts the first timestamp t1 in the first message. After receiving the first message, the slave terminal records the second timestamp t2 on a PHY chip or logic device. Therefore, the first group of timestamps t1 and t2 are obtained.

S102: The slave terminal performs switchover with the master terminal by exchanging messages with the master terminal.

In the embodiment, a switch module serving for switchover of optical fibers on a link is provided in the master terminal and the slave terminal respectively. The switch module serves to change optical fiber connection on a physical link through a respective switchover module inside the master terminal and the slave terminal without changing the optical fiber connection on the link.

After recording the second timestamp t2, the slave terminal sends a first switching message to the master terminal to inform the master terminal that the slave terminal has completed a timestamp record and the master terminal may perform switchover. After receiving the first switching message, the master terminal sends a second switching message to the slave terminal, and performs switchover after the second switching message is sent. After receiving the second switching message from the master terminal, the slave terminal also performs switchover. Therefore, switchover of optical fibers is implemented without plugging in or pulling out any optical fiber. Here, the switchover may be optical switchover or another type of switchover, but preferably be the optical switchover.

When optical switchover is completed, the master terminal sends a detection package to the slave terminal. If the master terminal receives a response package from the slave terminal, then it means that switchover is completed.

S103: When the switchover is completed, the slave terminal receives a second message from the master terminal, and records a fourth timestamp of receiving the second message, wherein the second message includes a third timestamp of sending the second message.

After the switchover is completed, the master terminal sends a message (i.e., the second message in the embodiment) again. After the second message is put into a PHY chip or logic device, the master terminal records the third timestamp t3 of sending the second message, and inserts the third timestamp t3 in the second message. After receiving the second message, the slave terminal records the fourth timestamp t4 of receiving the second message on a PHY chip or logic device. Therefore, the second group of timestamps t3 and t4 are obtained.

S104: The slave terminal calculates an asymmetric delay of a transmission link according to the first timestamp, the second timestamp, the third timestamp, and the fourth timestamp.

The slave terminal can calculate the asymmetric delay T of the transmission link where the optical fibers are located according to the acquired first timestamp t1, second timestamp 2, third timestamp t3 and fourth timestamp t4, wherein T=(t1-t2)-(t3-t4).

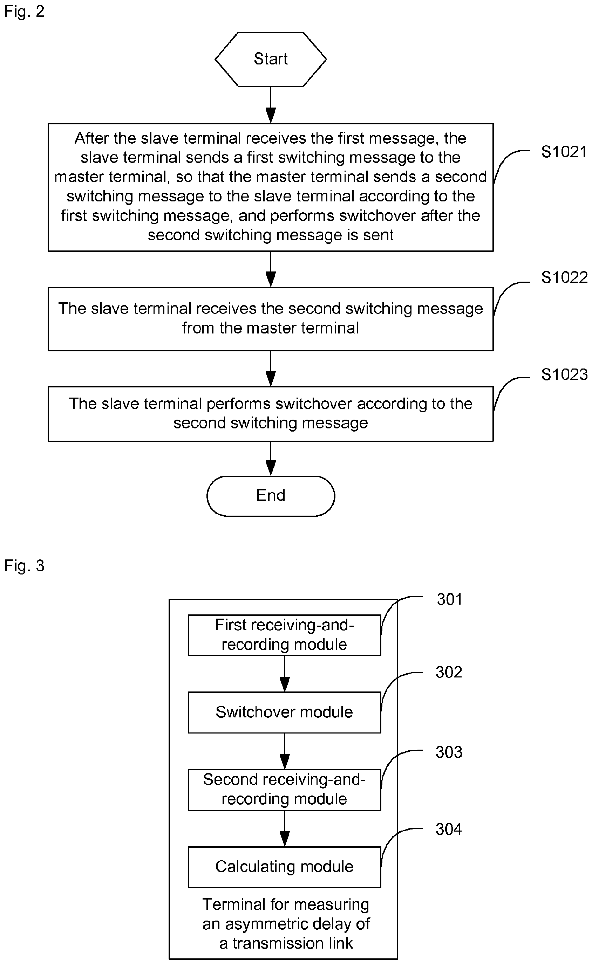

As shown in Fig. 2, step S102 includes:
S1021: After the slave terminal receives the first message, the slave terminal sends a first switching message to the master terminal, so that the master terminal sends a second switching message to the slave terminal according to the first switching message, and performs switchover after the second switching message is sent.
S1022: The slave terminal receives the second switching message from the master terminal.
S1023: The slave terminal performs switchover according to the second switching message.

In the embodiment of the disclosure, clock synchronization of a master terminal and a slave terminal at opposite ends of the transmission link is implemented by using a function of a synchronous Ethernet, a timestamp of sending or receiving a message by the master terminal or the slave terminal is recorded, switchover between optical fibers on a link is performed by switching a switch, and after switchover, a message is sent again and timestamps of the message at the master terminal and the slave terminal are recorded. According to the four timestamps acquired two by two, the slave terminal can calculate quickly an asymmetric delay of the transmission link, with an accuracy up to a nanosecond level. Switchover of optical fibers on a link is implemented by switching a respective optical switch in the master terminal and the slave terminal, so that inconvenience in manual switchover of optical fibers is avoided, and a process of performing a test by means of an external instrument is omitted.

As shown in Fig. 3, an embodiment of the disclosure proposes a terminal for measuring an asymmetric delay of a transmission link. The terminal includes a first receiving-and-recording module 301, a switchover module 302, a second receiving-and-recording module 303 and a calculating module 304, wherein
the first receiving-and-recording module 301 is configured to: receive a first message from a master terminal, and record a second timestamp of receiving the first message, wherein the first message includes a first timestamp of sending the first message;
the switchover module 302 is configured to perform switchover with the master terminal by exchanging messages with the master terminal;
the second receiving-and-recording module 303 is configured to: when the switchover is completed, receive a second message from the master terminal, and record a fourth timestamp of receiving the second message, wherein the second message includes a third timestamp of sending the second message; and
the calculating module 304 is configured to calculate an asymmetric delay of a transmission link according to the first timestamp, the second timestamp, the third timestamp, and the fourth timestamp.

The terminal in the embodiment is a slave terminal, and the slave terminal and the master terminal are located respectively at opposite ends of a transmission link where optical fibers an asymmetric delay of which is to be calculated are located.

First, the master terminal sends a first message to the first receiving-and-recording module 301 of the slave terminal, and carries the first timestamp of sending the first message in the first message. After receiving the first message from the master terminal, the first receiving-and-recording module 301 records a second timestamp t2 of receiving the first message, and acquires the first timestamp t1 in the first message.

In the embodiment, clock synchronization of the master terminal and the slave terminal is implemented via a synchronous Ethernet. Specifically, a PHY chip or logic device with functions of the synchronous Ethernet and recording a timestamp is used to implement the clock synchronization of the slave terminal with the master terminal and record timestamps of sending and receiving a message in a physical layer.

Wherein, a master-slave relation between the master terminal and the slave terminal can be determined by message interaction according to attributes of the two terminals after the two terminals start to operate, and the slave terminal performs clock synchronization with the master terminal via the synchronous Ethernet.

After the master terminal sends the first message and the first message is put into a PHY chip or logic device, the master terminal records the first timestamp t1 of sending the first message on the PHY chip or logic device, and inserts the first timestamp t1 in the first message. After receiving the first message, the first receiving-and-recording module 301 of the slave terminal records the second timestamp t2 on a PHY chip or logic device. Therefore, the first group of timestamps t1 and t2 are obtained.

In the embodiment, a switch module serving for switchover of optical fibers on a link is provided in the master terminal and the slave terminal respectively. The switch module serves to change optical fiber connection on a physical link through a respective switchover module inside the master terminal and the slave terminal without changing the optical fiber connection on the link.

After the first receiving-and-recording module 301 records the second timestamp t2, a first switching message is sent to the master terminal to inform the master terminal that the first receiving-and-recording module 301 has completed a timestamp record. The master terminal sends a second switching message according to the first switching message, and performs switchover after the second switching message is sent. After the switchover module 302 receives the second switching message from the master terminal, switchover is also performed. Therefore, switchover of optical fibers is implemented without plugging in or pulling out any optical fiber.

When optical switchover is completed, the master terminal sends a detection package to the slave terminal. If the master terminal receives a response package from the slave terminal, then it means that switchover is completed.

After the switchover is completed, the master terminal sends a message (i.e., the second message in the embodiment) again. After the second message is put into a PHY chip or logic device, the master terminal records the third timestamp t3 of sending the second message, and inserts the third timestamp t3 in the second message. After the second receiving-and-recording module 303 of the slave terminal receives the second message, the fourth timestamp t4 of receiving the second message is recorded on a PHY chip or logic device. Therefore, the second group of timestamps t3 and t4 are obtained.

The calculating module 304 can calculate the asymmetric delay T of the transmission link where the optical fibers are located according to the first timestamp t1, second timestamp 2, third timestamp t3 and fourth timestamp t4 acquired by the slave terminal, wherein T=(t1-t2)-(t3-t4).

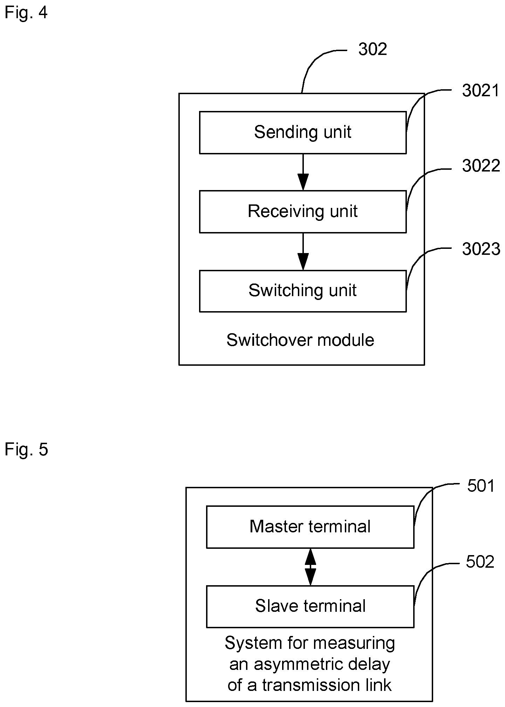

As shown in Fig. 4, the switchover module 302 includes a sending unit 3021, a receiving unit 3022 and a switching unit 3023, wherein
the sending unit 3021 is configured to: after the first receiving-and-recording module receives the first message, send a first switching message to the master terminal to inform the master terminal to perform switchover;
the receiving unit 3022 is configured to receive a second switching message from the master terminal after the master terminal completes switchover; and
the switching unit 3023 is configured to perform switchover according to the second switching message.

The slave terminal performs clock synchronization with the master terminal via a synchronous Ethernet.

As shown in Fig. 5, an embodiment of the disclosure proposes a system for measuring an asymmetric delay of a transmission link. The system includes a master terminal 501 and a slave terminal 502 that are located respectively at opposite ends of a transmission link, wherein
the master terminal 501 is configured to: send the slave terminal 502 a first message including a first timestamp of sending the first message; perform switchover with the slave terminal 502 by exchanging messages with the slave terminal 502; and when switchover is completed, send the slave terminal 502 a second message including a third timestamp of sending the second message; and
the slave terminal 502 is configured to: receive the first message from the master terminal 501 and record a second timestamp of receiving the first message; perform switchover with the master terminal 501 by exchanging messages with the master terminal 501; when switchover is completed, receive the second message from the master terminal 501 and record a fourth timestamp of receiving the second message; and calculate an asymmetric delay of the transmission link according to the first timestamp, the second timestamp, the third timestamp, and the fourth timestamp.

Furthermore, the slave terminal 502 is further configured to: after receiving the first message, send a first switching message to the master terminal 501 to inform the master terminal 501 to perform switchover. After receiving the first switching message, the master terminal 501 sends a second switching message to the slave terminal 502, and performs switchover after the second switching message is sent. After receiving the second switching message from the master terminal 501, the slave terminal 502 performs switchover according to the second switching message.

Wherein, the slave terminal 502 performs clock synchronization with the master terminal via a synchronous Ethernet.

Please refer to what described in the aforementioned embodiments for the basic principle of measuring an asymmetric delay of a transmission link by the master terminal 501 and the slave terminal 502 by exchanging messages with each other, which is not repeated here.

The embodiments of the disclosure propose a method, terminal and system for measuring an asymmetric delay of a transmission link aiming at the problem of asymmetry of the transmission link. Clock synchronization of a master terminal and a slave terminal at opposite ends of a transmission link is implemented by using a function of a synchronous Ethernet, a timestamp of sending or receiving a message by the master terminal or the slave terminal is recorded, switchover between optical fibers on a link is performed by switching a switch, and after switchover, a message is sent again and timestamps of the message at the master terminal and the slave terminal are recorded. The slave terminal can calculate an asymmetric delay of the transmission link quickly according to four timestamps acquired two by two, with an accuracy up to a nanosecond level. Switchover of optical fibers on a link is implemented by switching a respective optical switch in the master terminal and the slave terminal, so that inconvenience in manual switchover of optical fibers is avoided, and a process of performing a test by means of an external instrument is omitted.

The above are only preferable embodiments of the disclosure, and are not intended to limit the scope of protection of the disclosure, which is defined by the appended claims.

## Claims

1. A method for measuring an asymmetric delay of a transmission link, comprising:
performing, by a slave terminal, clock synchronization with a master terminal, wherein each of the master terminal and the slave terminal is provided with a switch module for changing optical fiber connection on a link through a respective switchover module inside each of the master terminal and the slave terminal without performing a manual switchover comprising plugging in or pulling out any optical fiber;
receiving (S101), by the slave terminal, a first message from the master terminal, and recording a second timestamp of receiving the first message, wherein the first message includes a first timestamp of sending the first message;
performing switchover (S102), by the slave terminal, with the master terminal by exchanging messages with the master terminal to change optical fiber connection through the switch module;
when the switchover is completed, receiving (S103), by the slave terminal, a second message from the master terminal, and recording a fourth timestamp of receiving the second message, wherein the second message includes a third timestamp of sending the second message; and
calculating (S104), by the slave terminal, an asymmetric delay T of a transmission link according to the first timestamp, the second timestamp, the third timestamp, and the fourth timestamp, wherein T=(t1-t2)-(t3-t4), t1, t2, t3 and t4 being the first timestamp, the second timestamp, the third timestamp, and the fourth timestamp, respectively;
wherein the step of performing switchover (S102) with the master terminal by exchanging messages with the master terminal to change optical fiber connection comprises:
after the slave terminal receives the first message, sending (S1021), by the slave terminal, a first switching message to the master terminal, so that the master terminal sends a second switching message to the slave terminal according to the first switching message, and performs switchover to change optical fiber connection after the second switching message is sent;
receiving (S1022), by the slave terminal, the second switching message from the master terminal; and
performing switchover (S1023), by the slave terminal, to change optical fiber connection according to the second switching message.

2. The method according to claim 1, wherein the slave terminal performs clock synchronization with the master terminal via a synchronous Ethernet.

3. A slave terminal for measuring an asymmetric delay of a transmission link, comprising a logic device, a switch module, a first receiving-and-recording module (301), a switchover module (302), a second receiving-and-recording module (303) and a calculating module (304), wherein
the logic device is configured to perform clock synchronization with a master terminal;
the switch module is configured to change optical fiber connection on a link through a respective switchover module inside the master terminal and the slave terminal without performing a manual switchover comprising plugging in or pulling out any optical fiber; the first receiving-and-recording module (301) is configured to: receive a first message from the master terminal, and record a second timestamp of receiving the first message, wherein the first message includes a first timestamp of sending the first message;
the switchover module (302) is configured to perform switchover with the master terminal by exchanging messages with the master terminal to change optical fiber connection through the switch module;
the second receiving-and-recording module (303) is configured to: when the switchover is completed, receive a second message from the master terminal, and record a fourth timestamp of receiving the second message, wherein the second message includes a third timestamp of sending the second message; and
the calculating module (304) is configured to calculate an asymmetric delay T of a transmission link according to the first timestamp, the second timestamp, the third timestamp, and the fourth timestamp, wherein T=(t1-t2)-(t3-t4), t1, t2, t3 and t4 being the first timestamp, the second timestamp, the third timestamp, and the fourth timestamp, respectively;
wherein the switchover module (302) comprises:
a sending unit (3021) configured to: after the first receiving-and-recording module receives the first message, send a first switching message to the master terminal to inform the master terminal to perform switchover;
a receiving unit (3022) configured to receive a second switching message from the master terminal; and
a switching unit (3023) configured to perform switchover to change optical fiber connection according to the second switching message.

4. The terminal according to claim 3, wherein the slave terminal performs clock synchronization with the master terminal via a synchronous Ethernet.

5. A system for measuring an asymmetric delay of a transmission link, comprising a master terminal (501) and a slave terminal (502) that are located respectively at opposite ends of a transmission link, wherein
the slave terminal (502) is configured to perform clock synchronization with the master terminal, and each of the master terminal (501) and the slave terminal (502) is provided with a switch module for changing optical fiber connection on a link through a respective switchover module inside each of the master terminal and the slave terminal without performing a manual switchover comprising plugging in or pulling out any optical fiber; wherein the master terminal (501) is configured to: send the slave terminal a first message comprising a first timestamp of sending the first message; perform switchover with the slave terminal by exchanging messages with the slave terminal to change optical fiber connection through the switch module; and when the switchover is completed, send the slave terminal a second message comprising a third timestamp of sending the second message; and
the slave terminal (502) is configured to: receive the first message from the master terminal and record a second timestamp of receiving the first message; perform switchover with the master terminal by exchanging messages with the master terminal to change optical fiber connection through the switch module; when the switchover is completed, receive the second message from the master terminal and record a fourth timestamp of receiving the second message; and calculate an asymmetric delay T of the transmission link according to the first timestamp, the second timestamp, the third timestamp, and the fourth timestamp, wherein T=(t1-t2)-(t3-t4), t1, t2, t3 and t4 being the first timestamp, the second timestamp, the third timestamp, and the fourth timestamp, respectively;
wherein the slave terminal (502) is configured to: after the slave terminal receives the first message, send a first switching message to the master terminal to inform the master terminal to perform switchover; receive a second switching message from the master terminal; and perform the switchover to change optical fiber connection according to the second switching message.

6. The system according to claim 5, wherein the master terminal (501) is configured to: after the master terminal sends the first message, receive the first switching message from the slave terminal; send the second switching message according to the first switching message; and when the second switching message is sent, perform switchover to change optical fiber connection.

7. The system according to claim 5, wherein the slave terminal (502) performs clock synchronization with the master terminal via a synchronous Ethernet.

## Patentansprüche

1. Verfahren zur Messung einer asymmetrischen Verzögerung einer Übertragungsstrecke, das Folgendes umfasst:
Durchführen einer Taktsynchronisation mit einem Hauptterminal durch ein Nebenterminal, wobei das Hauptterminal und das Nebenterminal jeweils mit einem Schaltmodul zur Änderung einer Lichtwellenleiterverbindung auf einer Strecke durch ein entsprechendes Umschaltmodul jeweils innerhalb des Hauptterminals und des Nebenterminals versehen sind, ohne eine manuelle Umschaltung durchzuführen, die ein Einstecken oder Herausziehen eines Lichtwellenleiters umfasst;
Empfangen (S101) einer ersten Nachricht vom Hauptterminal durch das Nebenterminal und Aufzeichnen eines zweiten Zeitstempels des Empfangens der ersten Nachricht, wobei die erste Nachricht einen ersten Zeitstempel des Sendens der ersten Nachricht enthält;
Durchführen einer Umschaltung (S102) mit dem Hauptterminal durch das Nebenterminal durch Austauschen von Nachrichten mit dem Hauptterminal zur Änderung der Lichtwellenleiterverbindung durch das Schaltmodul;
wenn die Umschaltung abgeschlossen ist, Empfangen (S103) einer zweiten Nachricht vom Hauptterminal durch das Nebenterminal und Aufzeichnen eines vierten Zeitstempels des Empfangens der zweiten Nachricht, wobei die zweite Nachricht einen dritten Zeitstempel des Sendens der zweiten Nachricht enthält; und
Berechnen (S104) einer asymmetrischen Verzögerung T einer Übertragungsstrecke gemäß dem ersten Zeitstempel, dem zweiten Zeitstempel, dem dritten Zeitstempel und dem vierten Zeitstempel durch das Nebenterminal, wobei T=(t1-t2)-(t3-t4), t1, t2, t3 und t4 der erste Zeitstempel, der zweite Zeitstempel, der dritte Zeitstempel bzw. der vierte Zeitstempel sind;
wobei der Schritt des Durchführens der Umschaltung (S102) mit dem Hauptterminal durch Austauschen von Nachrichten mit dem Hauptterminal zur Änderung der Lichtwellenleiterverbindung Folgendes umfasst:
nachdem das Nebenterminal die erste Nachricht empfängt, Senden (S1021) einer ersten Schaltnachricht an das Hauptterminal durch das Nebenterminal, so dass das Hauptterminal entsprechend der ersten Schaltnachricht eine zweite Schaltnachricht an das Nebenterminal sendet und eine Umschaltung zur Änderung der Lichtwellenleiterverbindung durchführt, nachdem die zweite Schaltnachricht gesendet ist;
Empfangen (S1022) der zweiten Schaltnachricht vom Hauptterminal durch das Nebenterminal; und
Durchführen einer Umschaltung (S1023) durch das Nebenterminal zur Änderung der Lichtwellenleiterverbindung entsprechend der zweiten Schaltnachricht.

2. Verfahren nach Anspruch 1, bei dem das Nebenterminal eine Taktsynchronisation mit dem Masterterminal über ein synchrones Ethernet durchführt.

3. Nebenterminal zur Messung einer asymmetrischen Verzögerung einer Übertragungsstrecke, mit einem Logikbaustein, einem Schaltmodul, einem ersten Empfangs- und Aufzeichnungsmodul (301), einem Umschaltmodul (302), einem zweiten Empfangs- und Aufzeichnungsmodul (303) und einem Rechenmodul (304), wobei
der Logikbaustein so eingerichtet ist, dass er eine Taktsynchronisation mit einem Hauptterminal durchführt;
das Schaltmodul so eingerichtet ist, dass es eine Lichtwellenleiterverbindung auf einer Strecke durch ein entsprechendes Umschaltmodul innerhalb des Hauptterminals und des Nebenterminals ändert, ohne eine manuelle Umschaltung durchzuführen, die ein Einstecken oder Herausziehen eines Lichtwellenleiters umfasst;
das erste Empfangs- und Aufzeichnungsmodul (301) so eingerichtet ist, dass es: eine erste Nachricht vom Hauptterminal empfängt und einen zweiten Zeitstempel des Empfangens der ersten Nachricht aufzeichnet, wobei die erste Nachricht einen ersten Zeitstempel des Sendens der ersten Nachricht enthält;
das Umschaltmodul (302) so eingerichtet ist, dass es eine Umschaltung mit dem Hauptterminal durch Austauschen von Nachrichten mit dem Hauptterminal durchführt, um die Lichtwellenleiterverbindung durch das Schaltmodul zu ändern;
das zweite Empfangs- und Aufzeichnungsmodul (303) so eingerichtet ist, dass es: dann, wenn die Umschaltung abgeschlossen ist, eine zweite Nachricht vom Hauptterminal empfängt und einen vierten Zeitstempel des Empfangens der zweiten Nachricht aufzeichnet, wobei die zweite Nachricht einen dritten Zeitstempel des Sendens der zweiten Nachricht enthält; und
das Rechenmodul (304) so eingerichtet ist, dass es eine asymmetrische Verzögerung T einer Übertragungsstrecke gemäß dem ersten Zeitstempel, dem zweiten Zeitstempel, dem dritten Zeitstempel und dem vierten Zeitstempel berechnet, wobei T=(t1-t2)-(t3-t4), t1, t2, t3 und t4 der erste Zeitstempel, der zweite Zeitstempel, der dritte Zeitstempel bzw. der vierte Zeitstempel sind;
wobei das Umschaltmodul (302) Folgendes umfasst:
eine Sendeeinheit (3021), die so eingerichtet ist, dass sie: nachdem das erste Empfangs- und Aufzeichnungsmodul die erste Nachricht empfängt, eine erste Schaltnachricht an das Hauptterminal sendet, um dem Hauptterminal mitzuteilen, eine Umschaltung durchzuführen;
eine Empfangseinheit (3022), die so eingerichtet ist, dass sie eine zweite Schaltnachricht vom Hauptterminal empfängt; und
eine Schalteinheit (3023), die so eingerichtet ist, dass sie eine Umschaltung durchführt, um die Lichtwellenleiterverbindung entsprechend der zweiten Schaltnachricht zu ändern.

4. Terminal nach Anspruch 3, wobei das Nebenterminal eine Taktsynchronisation mit dem Hauptterminal über ein synchrones Ethernet durchführt.

5. System zur Messung einer asymmetrischen Verzögerung einer Übertragungsstrecke, mit einem Hauptterminal (501) und einem Nebenterminal (502), die sich jeweils an entgegengesetzten Enden einer Übertragungsstrecke befinden, wobei
das Nebenterminal (502) so eingerichtet ist, dass es eine Taktsynchronisation mit dem Hauptterminal durchführt, und das Hauptterminal (501) und das Nebenterminal (502) jeweils mit einem Schaltmodul zur Änderung einer Lichtwellenleiterverbindung auf einer Strecke durch ein entsprechendes Umschaltmodul jeweils innerhalb des Hauptterminals und des Nebenterminals versehen sind, ohne eine manuelle Umschaltung durchzuführen, die ein Einstecken oder Herausziehen eines Lichtwellenleiters umfasst; wobei
das Hauptterminal (501) so eingerichtet ist, dass es: dem Nebenterminal eine erste Nachricht mit einem ersten Zeitstempel des Sendens der ersten Nachricht sendet, eine Umschaltung mit dem Nebenterminal durch Austauschen von Nachrichten mit dem Nebenterminal durchführt, um die Lichtwellenleiterverbindung durch das Schaltmodul zu ändern, und dann, wenn die Umschaltung abgeschlossen ist, dem Nebenterminal eine zweite Nachricht mit einem dritten Zeitstempel des Sendens der zweiten Nachricht sendet; und
das Nebenterminal (502) so eingerichtet ist, dass es: die erste Nachricht vom Hauptterminal empfängt und einen zweiten Zeitstempel des Empfangens der ersten Nachricht aufzeichnet; eine Umschaltung mit dem Hauptterminal durch Austauschen von Nachrichten mit dem Hauptterminal durchführt, um die Lichtwellenleiterverbindung durch das Schaltmodul zu ändern; dann, wenn die Umschaltung abgeschlossen ist, die zweite Nachricht vom Hauptterminal empfängt und einen vierten Zeitstempel des Empfangens der zweiten Nachricht aufzeichnet; und eine asymmetrische Verzögerung T der Übertragungsstrecke gemäß dem ersten Zeitstempel, dem zweiten Zeitstempel, dem dritten Zeitstempel und dem vierten Zeitstempel berechnet, wobei T=(t1-t2)-(t3-t4), t1, t2, t3 und t4 der erste Zeitstempel, der zweite Zeitstempel, der dritte Zeitstempel bzw. der vierte Zeitstempel sind;
wobei das Nebenterminal (502) so eingerichtet ist, dass es: nachdem das Nebenterminal die erste Nachricht empfängt, eine erste Schaltnachricht an das Hauptterminal sendet, um dem Hauptterminal mitzuteilen, eine Umschaltung durchzuführen; eine zweite Schaltnachricht vom Hauptterminal empfängt; und die Umschaltung durchführt, um die Lichtwellenleiterverbindung entsprechend der zweiten Schaltnachricht zu ändern.

6. System nach Anspruch 5, bei dem das Hauptterminal (501) so eingerichtet ist, dass es: nachdem das Hauptterminal die erste Nachricht sendet, die erste Schaltnachricht vom Nebenterminal empfängt; die zweite Schaltnachricht entsprechend der ersten Schaltnachricht sendet; und dann, wenn die zweite Schaltnachricht gesendet wird, eine Umschaltung zur Änderung der Lichtwellenleiterverbindung durchführt.

7. System nach Anspruch 5, bei dem das Nebenterminal (502) eine Taktsynchronisation mit dem Hauptterminal über ein synchrones Ethernet durchführt.

## Revendications

1. Procédé de mesure d'un retard asymétrique d'une liaison de transmission, comprenant :
la réalisation, par un terminal esclave, d'une synchronisation d'horloges avec un terminal maître, le terminal maître et le terminal esclave étant chacun pourvus d'un module commutateur pour le changement d'une connexion par fibres optiques au niveau d'une liaison au moyen d'un module de commutation respectif au sein du terminal maître et du terminal esclave sans la réalisation d'une commutation manuelle comprenant l'enfichage ou le retrait d'une fibre optique ;
la réception (S101), par le terminal esclave, d'un premier message provenant du terminal maître, et l'enregistrement d'un deuxième horodatage de réception du premier message, le premier message contenant un premier horodatage d'envoi du premier message ;
la réalisation d'une commutation (S102), par le terminal esclave, avec le terminal maître en échangeant des messages avec le terminal maître pour changer la connexion par fibres optiques au moyen du module commutateur ;
lorsque la commutation est complète, la réception (S103), par le terminal esclave, d'un deuxième message provenant du terminal maître, et l'enregistrement d'un quatrième horodatage de réception du deuxième message, le deuxième message contenant un troisième horodatage d'envoi du deuxième message ; et
le calcul (S104), par le terminal esclave, d'un retard asymétrique T d'une liaison de transmission conformément au premier horodatage, au deuxième horodatage, au troisième horodatage et au quatrième horodatage, avec T=(t1-t2)-(t3-t4), t1, t2, t3 et t4 étant le premier horodatage, le deuxième horodatage, le troisième horodatage et le quatrième horodatage, respectivement ;
l'étape de réalisation d'une commutation (S102) avec le terminal maître en échangeant des messages avec le terminal maître pour changer la connexion par fibres optiques comprenant :
l'envoi (S1021), par le terminal esclave, d'un premier message de commutation au terminal maître après la réception du premier message par le terminal esclave, de sorte que le terminal maître envoie un deuxième message de commutation au terminal esclave conformément au premier message et réalise une commutation pour changer la connexion par fibres optiques après avoir envoyé le deuxième message de commutation ;
la réception (S1022), par le terminal esclave, du deuxième message de commutation provenant du terminal maître ; et
la réalisation d'une commutation (S1023) par le terminal esclave pour changer la connexion par fibres optiques conformément au deuxième message de commutation.

2. Procédé selon la revendication 1, le terminal esclave réalisant la synchronisation d'horloges avec le terminal maître via Ethernet synchrone.

3. Terminal esclave pour la mesure d'un retard asymétrique d'une liaison de transmission, comprenant un dispositif logique, un module commutateur, un premier module de réception et d'enregistrement (301), un module de commutation (302), un deuxième module de réception et d'enregistrement (303) et un module de calcul (304),
le dispositif logique étant configuré de manière à réaliser une synchronisation d'horloges avec un terminal maître ;
le module commutateur étant configuré de manière à changer la connexion par fibres optiques au niveau d'une liaison au moyen d'un module de commutation respectif au sein du terminal maître et du terminal esclave sans la réalisation d'une commutation manuelle comprenant l'enfichage ou le retrait d'une fibre optique ;
le premier module de réception et d'enregistrement (301) étant configuré de manière à : recevoir un premier message provenant du terminal maître, et à enregistrer un deuxième horodatage de réception du premier message, le premier message contenant un premier horodatage d'envoi du premier message ;
le module de commutation (302) étant configuré de manière à réaliser une commutation avec le terminal maître en échangeant des messages avec le terminal maître pour changer la connexion par fibres optiques au moyen du module commutateur ;
le deuxième module de réception et d'enregistrement (303) étant configuré de manière à : recevoir un deuxième message provenant du terminal maître lorsque la commutation est complète, et à enregistrer un quatrième horodatage de réception du deuxième message, le deuxième message contenant un troisième horodatage d'envoi du deuxième message ; et
le module de calcul (304) étant configuré de manière à calculer un retard asymétrique T d'une liaison de transmission conformément au premier horodatage, au deuxième horodatage, au troisième horodatage et au quatrième horodatage, avec T=(t1-t2)-(t3-t4), t1, t2, t3 et t4 étant le premier horodatage, le deuxième horodatage, le troisième horodatage et le quatrième horodatage, respectivement ;
le module de commutation (302) comprenant :
une unité d'envoi (3021) configurée de manière à : envoyer un premier message de commutation au terminal maître après la réception du premier message par le premier module de réception et d'enregistrement pour informer le terminal maître pour réaliser la commutation ;
une unité de réception (3022) configurée de manière à recevoir un deuxième message de commutation provenant du terminal maître ; et
une unité de commutation (3023) configurée de manière à réaliser une commutation pour changer la connexion par fibres optiques conformément au deuxième message de commutation.

4. Terminal selon la revendication 3, le terminal esclave réalisant une synchronisation d'horloges avec le terminal maître via Ethernet synchrone.

5. Système de mesure d'un retard asymétrique d'une liaison de transmission, comprenant un terminal maître (501) et un terminal esclave (502) qui sont respectivement agencés à des extrémités opposées d'une liaison de transmission,
le terminal esclave (502) étant configuré de manière à réaliser une synchronisation d'horloges avec le terminal maître, et le terminal maître (501) et le terminal esclave (502) étant chacun pourvus d'un module commutateur pour changer la connexion par fibres optiques au niveau d'une liaison au moyen d'un module de commutation respectif au sein du terminal maître et du terminal esclave sans la réalisation d'une commutation manuelle comprenant l'enfichage ou le retrait d'une fibre optique ;
le terminal maître (501) étant configuré de manière à : envoyer au terminal esclave un premier message comprenant un premier horodatage d'envoi du premier message ; à réaliser une commutation avec le terminal esclave en échangeant des messages avec le terminal esclave pour changer la connexion par fibres optiques au moyen du module commutateur ; et à envoyer au terminal esclave un deuxième message comprenant un troisième horodatage d'envoi du deuxième message lorsque la commutation est complète ; et
le terminal esclave (502) étant configuré de manière à : recevoir le premier message provenant du terminal maître et à enregistrer un deuxième horodatage de réception du premier message ; à réaliser une commutation avec le terminal maître en échangeant des messages avec le terminal maître pour changer la connexion par fibres optiques au moyen du module commutateur ; lorsque la commutation est complète, à recevoir le deuxième message du terminal maître et à enregistrer un quatrième horodatage de réception du deuxième message ; et à calculer un retard asymétrique T de la liaison de transmission conformément au premier horodatage, au deuxième horodatage, au troisième horodatage et au quatrième horodatage, avec T=(t1-t2)-(t3-t4), t1, t2, t3 et t4 étant le premier horodatage, le deuxième horodatage, le troisième horodatage et le quatrième horodatage, respectivement ;
le terminal esclave (502) étant configuré de manière à : envoyer un premier message de commutation au terminal maître après la réception du premier message par le terminal esclave pour informer le terminal maître pour réaliser une commutation ; à recevoir un deuxième message de commutation provenant du terminal maître ; et à réaliser la commutation pour changer la connexion par fibres optiques conformément au deuxième message de commutation.

6. Système selon la revendication 5, le terminal maître (501) étant configuré de manière à : recevoir le premier message de commutation provenant du terminal esclave après l'envoi du premier message par le terminal maître ; à envoyer le deuxième message de commutation conformément au premier message de commutation ; et, lorsque le deuxième message de commutation est envoyé, à réaliser la commutation pour changer la connexion par fibres optiques.

7. Système selon la revendication 5, le terminal esclave (502) réalisant la synchronisation d'horloges avec le terminal maître via Ethernet synchrone.
